# EUROPEAN PATENT SPECIFICATION

(11) **EP 3 538 280 B1**
(45) Date of publication and mention of the grant of the patent: **18.01.2023**
(21) Application number: 17869039.2
(22) Date of filing: 14.11.2017
(51) Int. Cl.: B03B 5/56, B03B 5/52, B03B 9/04, B03B 9/06, B07B 1/22, B07B 1/26

(54) **METHOD AND SYSTEM FOR RECOVERING METAL USING A HELIX SEPARATOR**
VERFAHREN UND SYSTEM ZUR RÜCKGEWINNUNG VON METALL MIT EINEM HELIXSEPARATOR
PROCÉDÉ ET SYSTÈME DE RÉCUPÉRATION DE MÉTAL AU MOYEN D'UN SÉPARATEUR HÉLICOÏDAL

(30) Priority: 14.11.2016 US 201662421985 P; 23.06.2017 US 201762524281 P
(43) Date of publication of application: 18.09.2019
(73) Proprietor: Valerio, Thomas, A., Atlanta, GA 30354 (US)
(72) Inventor: Valerio, Thomas, A., Atlanta, GA 30354 (US)
(74) Representative: Dr. Träger & Strautmann PAe PartG mbB
(86) International application number: PCT/US2017/061613
(87) International publication number: WO 2018/090039

(56) References cited:
- DE-C- 329 053
- GB-A- 922 500
- GB-A- 1 308 204
- US-A- 1 497 176
- US-A- 2 065 321
- US-A- 2 942 731
- US-A- 4 203 831
- US-A- 4 252 642
- US-A- 5 894 936
- US-A- 5 906 321
- US-A1- 2012 175 288
- US-A1- 2016 167 058

## Description

### RELATED APPLICATIONS

This application claims the benefit of U.S. Provisional Patent Application Nos. 62/421,985, filed November 14, 2016 and 62/524,281 filed on June 23, 2017.

### TECHNICAL FIELD

This disclosure generally relates to metal recovery, and more particularly relates to recovering metals from a waste stream containing metals (e.g., incinerator ash, automobile shredder residue, steeling making slags, electronic shredder residue, and ferrochrome furnace slags).

### BACKGROUND

Around the world, attention is paid to the adverse environmental effects of landfilling waste. Proper landfilling of waste requires large areas of land, which may be in limited supply in certain urban areas. The waste also may pose adverse environmental effects, including effects to water tables underlying disposal sites, due to contamination from chemicals and heavy metals contained in the waste.

Recovery of these valuable resources has been instituted in various waste streams. For example, at the end of its useful life, an automobile is shredded. This shredded material includes ferrous and non-ferrous metals. The remaining materials that are not recovered are referred to as automobile shredder residue ("ASR"), which may also include ferrous and non-ferrous metals, including copper wire and other recyclable
esently, ASR is typically disposed of in a landfill. Similar efforts have been made to recover materials from whitegood shredder residue ("WSR"), which includes the waste materials left over after recovering ferrous metals from shredded machinery or large appliances. Moreover, efforts have been made to recover materials from electronic components (also known as "e-waste" or "waste electrical and electronic equipment" ("WEEE")), building components, retrieved landfill material, and other industrial waste streams. Prior art document DE 329 053 C discloses a washing apparatus for separating materials with different specific weight. Document US 1 497 176 A discusses an ore separator in which minerals with light specific gravity are floating on water while those with greater specific gravity are sinking. In document US 2 065 321 A an apparatus for separating materials with higher specific gravity from materials with lighter specific gravity.

There is always a need for improved systems and methods to recover materials from waste streams. It is to this need, among others, that this disclosure is directed.

### SUMMARY

A method and system of waste material separation is disclosed herein. The method comprising providing a waste material, wherein the waste stream comprises waste particles and a flow of liquid. A rotating cylinder is also provided, wherein the rotating cylinder has one or more helical separators disposed therein. The one or more helical separators further comprise a spiral structure and a set of longitudinally extending grooves along the spiral structure. One or more nozzles are also provided, and the nozzles are configured to introduce a spray of liquid onto the waste stream. The method additionally comprises introducing the waste stream into an inlet of the helix separator. A sizing step is also included, wherein the helix separator is rotated to separate the waste particles according to the particles' settling velocities or densities, such that a heavy fraction settles into the grooves and a light fraction remains at the top of the waste stream. Each of the one or more nozzles creates a stream of liquid over the waste stream e light fraction in a direction opposite the heavy fraction. In the disclosed
method, the heavy fraction travels up the helix separator to be collected, and the light fraction is pushed to the back of the helix separator to exit a back end of the rotating cylinder. The system can include equipment described herein.

### BRIEF DESCRIPTION OF THE DRAWINGS

This disclosure is illustrated in the figures of the accompanying drawings which are meant to be illustrative and not limiting, in which like references are intended to refer to like or corresponding parts, and in which:
FIG. 1 illustrates an exemplary flow diagram for recovering metals from a waste stream according to the present disclosure;
FIG. 2 illustrates another exemplary flow diagram for recovering metals from a waste stream according to the present disclosure;

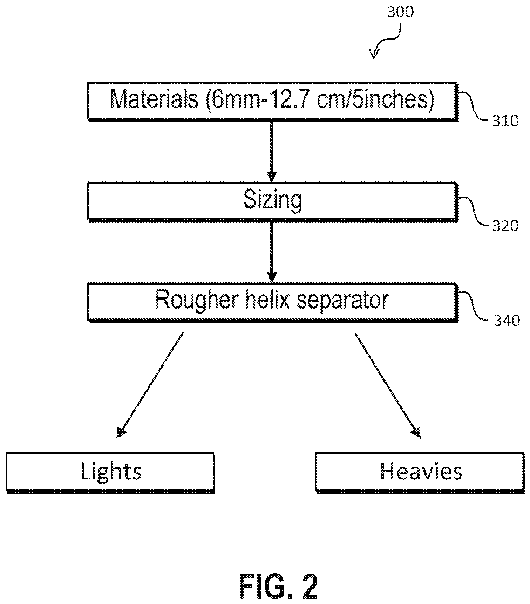

FIG. 2 illustrates another exemplary flow diagram for recovering metals from a waste stream according to the present disclosure; and

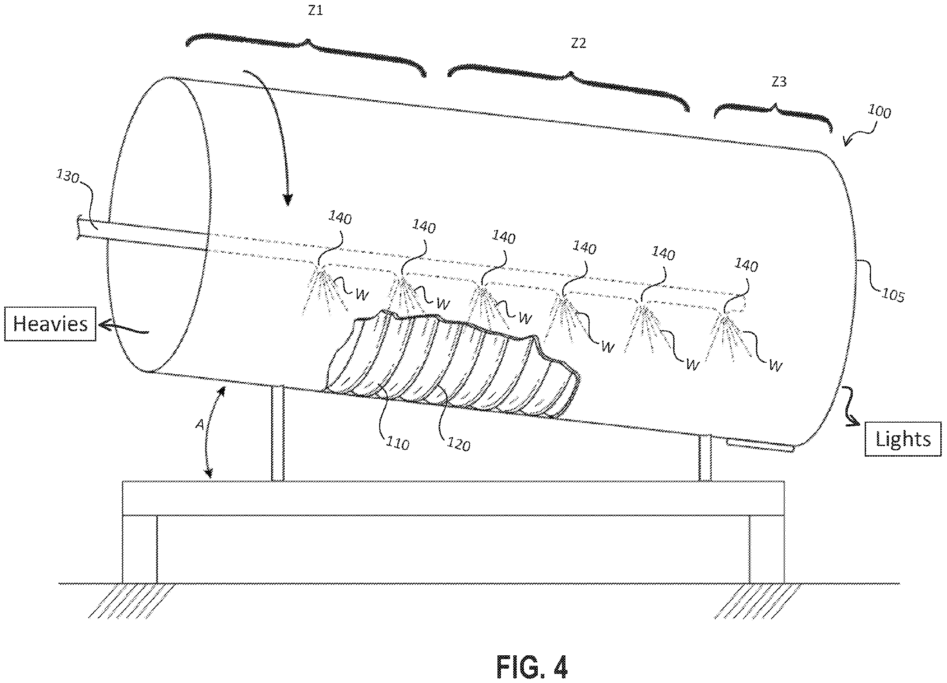

FIG. 4 illustrates an exemplary helix separator.

### DETAILED DESCRIPTION

Embodiments of methods and systems for the separation and recovery of metal from a waste material using a helix separator are disclosed. The disclosed embodiments are particularly well-suited for recovering metals from metal-containing material. Some embodiments of the disclosed method include one or more of the following three steps: (1) sizing, (2) separating using the helix separator, and (3) collecting.

Detailed embodiments of the systems and methods are disclosed herein, however, nderstood that the disclosed embodiments are merely illustrative of the systems, devices, and methods, which may be embodied in various forms. Therefore, specific functional details disclosed herein are not to be interpreted as limiting but merely as a basis for the claims and as a representative basis for teaching one skilled in the art to variously employ the systems, devices, and methods disclosed herein. In certain examples, the methods and systems can function as a high velocity rougher.

Generally, this disclosure relates to systems and methods for recovering metal constituents from a waste stream containing metals. In specific embodiments, the methods and systems include one or more helix separators or rotary separators or trommels. In one example, the helix separator may be a cylinder lined with spirals along the inside. Sizes range from small 0.3048m (1 foot) diameter by 1.524m (5 feet) long cleaners to large roughers 2.4384m (8 feet) in diameter and 12.192m (40 feet) long. These separators may use a liquid such as water (water with media), for example, to separate particles according to the particles' settling velocities and densities.

In one embodiment, the waste stream may include waste streams having characteristics similar to incinerator ash, ASR, WSR, and WEEE. ASR, WSR, and WEEE, and incinerator ash have metals as hair wires or electronic pin connectors or metal with flat, flake-like shapes. A "mixed waste stream containing metals" includes, but is not limited to, these waste streams. In another embodiment, the waste stream may include waste streams having characteristics similar to waste-to-energy slag, steelmaking slag, and ferrochrome slag.

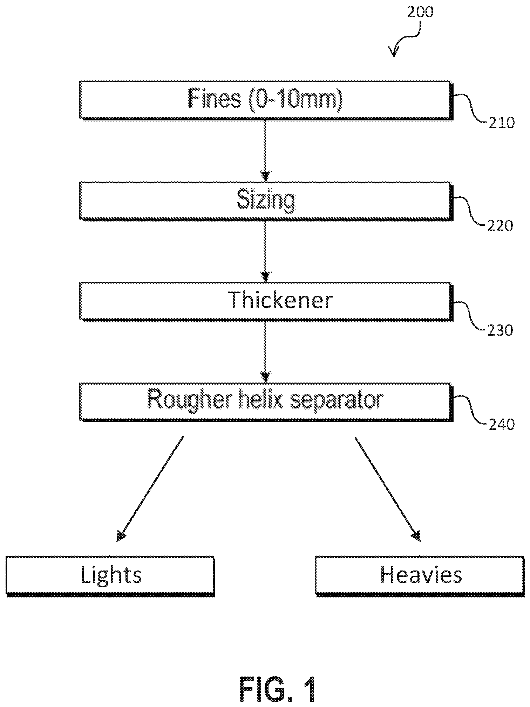

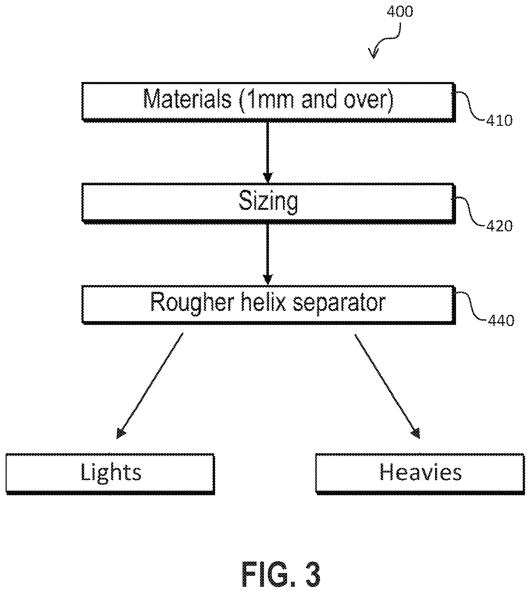

Referring to FIGs. 1 through 3, equipment layouts or flow diagrams for a mixed waste stream containing metals processing system are described. The equipment layout represents an exemplary layout and method. Therefore, various aspects may be omitted depending on implementation and design choice. In one embodiment illustrated in FIG. 1, the system 200 can include materials or fines from 0 to 10mm 210, which can be sized 220 and sorted, a round thickener 230 and an eccentric pump, and at least one helix separator/screen 240. In another embodiment illustrated in FIG. 2, the system 300 can include materials greater than about 1mm to about 127 mm/5 inches 310, which may be sized 320, a round thickener (not shown), and at least one helix separator/screen 340. In another embodiment illustrated in FIG. 3, the system 400 can include materials greater than about 1mm or greater than 10 mm or greater than 20mm 410, which can be sized 420 and sorted, a round thickener, and at least one helix separator/screen 440. The process and system can include a rougher, cleaner, and/or finisher helix separator. Additionally and/or alternatively, the system can include a water table or other finishing and cleaning steps or separators. In each of the embodiments, the lights and heavies from the helix separator 240, 340, 440 can be collected and/or further processed by, e.g., a scavenger circuit.

FIG. 4 illustrates one embodiment of the disclosed system for recovering a metal from a metal-containing waste. As can be seen, specific embodiments include the use of a helix separator 100, which is a type of spiral concentrator. An example of a helix separator/screen is shown in FIG. 1. The spiral design is a helix trommel. A helix can be a cylinder 105 lined with spirals along the inside. During operation, the length and width of a series of grooves 120 create a classifying effect as the materials pass therethrough. The heavier concentrates settle into the bottom of the grooves 120 upwards/against the
introduced material is at the upper portion, and one or more spray heads or nozzles140 continuously push the lighter material along the cylinder 105. The heavy concentrate continues moving forward, falling out of the grooves and into a container. In one embodiment, the chamber is a continuous solid structure. The sprayheads or nozzles 140 can be disposed along a wash water supply 130, and the nozzles 140 can be arranged to create disparate or uniform zones (e.g., Z1, Z2, Z3, etc.) of water wash (W).

Helixes are suitable for use as roughers or cleaners, depending on their size. In one embodiment, the sizes range from small 0.3048m (1 foot) diameter by 1.524m (5 feet) long cleaners to large roughers 2.4384m (8 feet) in diameter and 12.192m (40 feet) long. In one example, the linear length is about 2.4384m (96 inches). In another embodiment, the sizes are much larger.

The spirals that line the inside of the cylinder 105 are situated such that heavy material is carried towards the front of the unit during rotation. Feed can be introduced about halfway into the unit. Wash water can be delivered by a spray bar 130 and associated sprayheads of nozzles 140 from the point of feed entry to the front end of the helix. This water (W) is sprayed towards the back end of the unit. As the helix rotates clockwise, the water spray washes lighter material over the spirals and out the back end. The concentrate is directed by centrifugal force and gravity into the troughs or grooves 120 of the spirals and is carried to the front of the helix where it is collected.

There can be a stationary helix contained with the helix separator. The spiral separator receives only a small proportion of the volume flow. This relatively strongly concentrated fraction undergoes a secondary treatment in the spiral separator by the laminar flow stratification process. As a result of the strong friction between the sludge running down the wall of the chamber and the helical gutter, the heavier metals are concentrated at the lowest point of the spiral separator, while the lighter substances float in the overflow. The centrifugal force then creates bands running adjacently to each other with their specific gravities decreasing from the inside out. The components are then exhausted separately at the lower end of the spiral of the helix. The heavier metallic components concentrated in the spiral separator are passed according to e.g., cleaning table or another helix separator.

The helix separator can have zones (e.g., Fig. 4) to allow more control over the separation process. In one example, each zone has a source of wash/dressing water, sprayheads or nozzles 140, and liner that is different from another zone in the helix separator. The actual "working surface" of the separator is made up of a series of leads 110 running lengthwise (in reverse) in a critical tight spiral pattern along the inner barrel. The leads have a set angle on the uphill side and a counter angle on the downhill side and are larger in height and width at the rear of the barrel than at the front. This is a continuous process allowing the metal concentrate to be recovered in hands-off fashion while the waste is being discharged out of the rear of the spiral. For larger volume processing, multiple separators can be installed in series with the waste stream being fed automatically from one separator to the next.

The helix separator 100 can be positioned on an adjustable incline angle A of between 0 and 12 degrees with respect to the horizontal plane or between about 4 and 6 degrees with respect to the horizontal plane or between 5 and 6 degrees with respect to the horizontal plane. In one embodiment the helix separator can be inclined at a slight angle to the horizontal, with the potential use of a continuous helix to facilitate constant
us embodiments the angle of inclination can be about 1, 2, 3, 4, 5, 6, 7, 8, 9, 10, and 12 degrees. In various embodiments the angle of inclination can be between any two of the above specified angles. In various embodiments the angle of inclination can be varied between any two of the above specified angles. The optimal angle of incline may depend on general size and shapes of the materials being separated.

A slurry of material can be introduced to the spiral separator 100. Sand, dirt or other materials may be added to the material to improve separation or density separation. The waste stream or material may be introduced into one or more rotating helixes 100 of the system. From the feeder, the waste stream or material flows into a helix separator 100. The helix separator can be at an angle A with respect to the ground or the horizontal plane. The helix separator uses settling velocities of particles in a liquid (such as water) to separate particles having different characteristics. For example, denser materials fall at a faster rate than less dense materials. Spherical materials may fall faster through the liquid than less-spherical materials of similar density (that is materials flatter in shape). The heavies or heavy materials contain metals and the light materials contain less valuable material. The lights may be sent to a "scavenger stage" meaning a separation operation which is performed directly or indirectly on a primary tailings component from a rougher stage, directly or indirectly on a tailings component from a cleaner stage, directly or indirectly on a tailings component from a recleaner stage, or a combination thereof.

The system can include a distribution box that slows the flow of material through the system. The slurry or waste stream may be about 20 to 60 percent (%) solid material. In another embodiment, the solid material in the slurry is about 40% of the material. A
ox can break the flow of material and allow for the flow of material to be relatively constant.

The system can be adjusted by adjusting the speed of the chamber, the water flow, and the pressure from the sprayheads. In one embodiment, the water flows between about 40 and 50 gallons per minute, and each nozzle provides 5psi of water pressure. In other example, the chamber may be vibrated (e.g., by high frequency) using electromagnetic vibrations or ultrasonic vibrations.

Referring to FIG. 2, exemplary systems or methods for recovering metals from a waste stream are described. The system or method represents an exemplary implementation and, therefore, various components may be omitted depending on implementation and design choice. The system in this specific embodiment, as described here, can include optionally (a) a sizer 220, (b) a screen, (c) a de-fuzzer (not shown), (d) a thickener/round thickener 230, (e) a helix separator 240, and (f) a polishing table (not shown). This system may operate according to the layouts shown in FIG. 2. Sizing or discrete sizing can improve separation of materials.

A size reducer can also be employed. The size reducer can be a ball mill, crusher, shredder, or like apparatus capable of reducing the size of the materials sent to the size reducer. Upon the materials being reduced in size, the materials may be sent back to a screen for further separation. Both crushing and grinding lead to size reduction of the material or to "comminution." Ball milling can be used to prepare powdered materials, e.g., materials greater than 35 or 50 mesh (e.g., about 100 mesh or 80 mesh).

The materials can be segregated into discrete size ranges based on, e.g., commercially available equipment and specifications. Exemplary and illustrative size ranges include about 2 to about 6 mm, about 6 to about 10 mm, about 10 mm to about 17 mm. about 17 mm to about 25 mm. about 25 mm to about 35 mm, and about 35 mm to about 100 mm. Materials about 100 mm and greater are removed from the system 100 through manual or automatic processing. An exemplary optimal size ratio upon segregation is about 3:1. Separation of the materials into discrete batch size ranges provides more effective processing at later processing stages of the system. More particularly, each fraction can be batched through system to promote efficiency. In one embodiment, the ratio of the upper cut to lower cut may be less than 4.

Optionally, certain embodiments can include a thickener, which is usually carried out in decantation tanks employing gravity sedimentation. These tanks may be fitted with mechanical scrapers to collect and move the settled solids to the point of discharge, the clear overflow being collected and removed by means of peripheral launders.

The various embodiments are based on and can include modes. In batch mode, a rapidly rotating cylindrical screen with material placed inside is vibrated so that the materials or fines pass along the outer screen wall where they are collected. In continuous mode, a rapidly rotating conical screen has material introduced inside of the small end and is vibrated so that material flows along its inner wall. The materials or fines pass along the screen wall where it is collected, and the coarse material travels axially out the end.

In one embodiment, the system and method can be used to separate or classify metals or materials with a minor difference in specific gravity. In one example, the system and method can separate iron and copper with a high efficiency. In other example, the system and method can separate zinc and copper. The system and method can separate heavier (e.g., precious metals, lead, and iron) and light metals (e.g., aluminum or magnesium) in operation.

The overall method can be substantially continuous. Certain steps, however, can be batch or semi-batch processes. For example, the separation step can be a multi-stage, semi-batch process. The metal-containing material can be exposed to the separation step in a countercurrent process to form the metal and a residue. After being depleted of the metal, the metal-containing material becomes a residue. During the separation step, batches of the metal-containing material can be moved between two or more stations in series, such as in baskets. The material can be moved through these stations in a direction opposite to the direction in which the batches of metal-containing material are moved. In this way, the metal-containing material is in contact with helix separator having a lower concentration of the metal as the metal-containing material moves through the process, and the concentration of metal in the metal-containing material decreases.

The methods and systems can be automated to allow higher efficiencies. The systems and methods may employ proportional-integral-derivative controllers, which can allow, e.g., control and monitoring of the speeds of the components, the angles of the spiral separators (e.g., with respect to the ground), flow of the slurry or waste stream (or specific gravity of slurry), the flow of water or wash fluid, or a combination thereof. The spiral separators that can be adjusted with such flexibility can result in higher efficiencies. By employing automatic controllers and monitors, the process can allow reduced downtime and greater flexibility.

Although specific embodiments of the disclosure have been described above in detail, the description is merely for purposes of illustration. It should be appreciated, therefore, that many aspects of the disclosure were described above by way of example only and are not intended as required or essential elements of the disclosure unless explicitly stated otherwise. Various modifications of, and equivalent steps corresponding to, the disclosed aspects of the exemplary embodiments, in addition to those described above, can be made by a person of ordinary skill in the art, having the benefit of this disclosure, without departing from the scope of the invention defined in the following claims, the scope of which is to be accorded the broadest interpretation so as to encompass such modifications and equivalent structures.

## Claims

1. A method of waste material separation, comprising:
providing a waste stream, wherein the waste stream comprises waste particles and a flow of liquid, wherein the waste stream comprises incinerator ash, automobile shredder residue, whitegood shredder residue, e-waste, building components, waste-to-energy slag, steelmaking slag, ferrochrome slag, retrieved landfill material, or a combination thereof;
providing a helix separator (100) that is a rotating cylinder (105) having (a) one or more helical separators disposed therein, the one or more helical separators (100) further comprising: a spiral structure, (b) a set of longitudinally extending grooves (120) disposed along the spiral structure, and (c) nozzles (140) configured to introduce a spray of liquid onto the waste stream along the length of the cylinder,
a sizing step, wherein the waste stream is introduced into an inlet of the helix separator (100); the sizing step comprises rotation of the helix separator to separate the waste particles according to the particles' settling velocities or densities, wherein a heavy fraction settles into the grooves and a light fraction remains at the top of the waste stream; and
the heavy fraction travels up the helix separator (100) to be collected and the light fraction is pushed to the back of the helix separator (100) and exits a back end of the rotating cylinder;
**characterised in that,** each of the one or more nozzles (140) creates a stream of liquid over the waste stream that pushes the light fraction in a direction opposite the heavy fraction.

2. The method of claim 1, wherein the helix separator (100) further comprises a plurality of zones, wherein each zone comprises a liner; and the nozzles, liquid content of the spray, the liner, or a combination therefore differs from one zone to another.

3. The method of claim 1 or 2, wherein the helix separator (100) comprises a series of leads, a downhill side, and an uphill side; and the leads comprise a set angle on the uphill side and a counter angle on the downhill side.

4. The method of anyone of claims 1 to 3, wherein the helix separator (100) is positioned on an adjustable incline angle with respect to the horizontal plane and preferably the angle is between 0 and 12 degrees with respect to the horizontal plane.

5. The method of anyone of claims 1 to 4, wherein the flow of liquid is between about 151 liter to 189 liter (40 and 50 gallons) per minute and each nozzle provides about 0,3 bar (5 psi) of water pressure.

6. The method of anyone of claims 1 to 5, wherein the helix separator (100) comprises a chamber that is configured to vibrate at varying frequencies.

7. The method of anyone of claims 1 to 6, wherein the waste particles range in size from less than about 10 mm up to about 13 cm.

8. The method of anyone of claims 1 to 7, wherein a rotation speed of the helix separator (100), liquid flow, pressure from the spray from the nozzles (140), or a combination thereof is adjustable.

9. A system for separating waste material, comprising:
a) a source of material that is incinerator ash, automobile shredder residue, whitegood shredder residue, e-waste, building components, waste-to-energy slag, steelmaking slag, ferrochrome slag, retrieved landfill material, or a combination thereof;
b) a sizer for sizing the material;
c) a helix separator (100) configured to separate the material in to a heavy fraction and the light fraction, wherein a helix separator is a rotating cylinder (105) having (a) one or more helical separators disposed therein, the one or more helical separators further comprising: a spiral structure, (b) a set of longitudinally extending grooves disposed along the spiral structure, and (c); nozzles (140) configured to introduce a spray of liquid onto the waste stream along the length of the cylinder, and the helix separator is positioned at an incline angle with respect to the horizontal plane; and
d) a collector;
**characterised in that,** the nozzles (140) deliver a stream of wash liquid in the helix separator (100) to push the light fraction in a direction opposite the heavy fraction.

10. The system of claim 9, wherein the helix separator (100) further comprises a plurality of zones, wherein each zone further comprises a liner; and
the nozzle, content of the wash liquid, liner, or a combination therefore differs from one zone to another.

11. The system of any one of claims 9 to 10, wherein the helix separator (100) comprises a series of leads, a downhill side, and an uphill side; and the leads further comprise a set angle on the uphill side and a counter angle on the downhill side.

12. The system of any one claims 9 to 11, wherein the helix separator (100) further comprises a spiral structure that comprises a set of longitudinally extending grooves (120);
the grooves being configured to receive at least a portion of the heavy fraction during separation.

13. The system of any one claims 9 to 12, wherein the helix separator (100) comprises a chamber that is configured to vibrate at varying frequencies.

14. The system of any one of claims 9 to 13, further comprising a rougher, a cleaner, a finisher helix separator, a thickener, an eccentric pump, a screened separator, a de-fuzzer, a polishing table, a size-reducer, a distribution box configured to create a constant flow of waste stream cylinder, or a combination thereof.

## Patentansprüche

1. Verfahren zur Abfallstofftrennung, umfassend:
Bereitstellen eines Abfallstroms, wobei der Abfallstrom Abfallpartikel und einen Flüssigkeitsstrom umfasst, wobei der Abfallstrom Verbrennungsofenasche, Autoschredderrückstände, Weißwarenschredderrückstände, Elektroschrott, Baukomponenten, Müllverstromungsschlacke, Stahlwerksschlacke, Ferrochromschlacke, wiedergewonnenes Deponiematerial oder eine Kombination davon umfasst;
Bereitstellen eines Wendelseparators (100), der ein rotierender Zylinder (105) ist, der (a) einen oder mehrere darin angeordnete Wendelseparatoren aufweist, wobei der eine oder die mehreren Wendelseparatoren (100) ferner Folgendes umfassen: eine Spiralstruktur, (b) einen Satz sich in Längsrichtung erstreckender Nuten (120), die entlang der Spiralstruktur verteilt angeordnet sind, und (c) Düsen (140), die so konfiguriert sind, dass sie einen Flüssigkeitsstrahl auf den Abfallstrom entlang der Länge des Zylinders einleiten,
einen Zerkleinerungsschritt, bei dem der Abfallstrom in einen Einlass des Wendelseparators (100) eingeführt wird; der Zerkleinerungsschritt umfasst eine Drehung des Wendelseparators, um die Abfallpartikel entsprechend den Absetzgeschwindigkeiten oder Dichten der Partikel zu trennen, wobei sich eine schwere Fraktion in den Rillen absetzt und eine leichte Fraktion am oberen Ende des Abfallstroms verbleibt; und
die schwere Fraktion den Wendelseparator (100) hinaufwandert, um gesammelt zu werden, und die leichte Fraktion an die Rückseite des Wendelseparators (100) geschoben wird und aus einem hinteren Ende des rotierenden Zylinders austritt;
**dadurch gekennzeichnet, dass** jede der einen oder mehreren Düsen (140) einen Flüssigkeitsstrom über dem Abfallstrom erzeugt, der die leichte Fraktion in eine der schweren Fraktion entgegengesetzte Richtung schiebt.

2. Verfahren nach Anspruch 1, wobei der Wendelseparator (100) ferner eine Vielzahl von Zonen umfasst, wobei jede Zone eine Auskleidung umfasst; und die Düsen, der Flüssigkeitsgehalt des Sprühnebels, die Auskleidung oder eine Kombination davon von einer Zone zur anderen unterschiedlich sind.

3. Verfahren nach Anspruch 1 oder 2, wobei der Wendelseparator (100) eine Reihe von Steigungen, eine abwärts gerichtete Seite und eine aufwärts gerichtete Seite umfasst; und die Steigungen einen eingestellten Winkel auf der aufwärts gerichteten Seite und einen Gegenwinkel auf der abwärts gerichteten Seite umfassen.

4. Verfahren nach einem der Ansprüche 1 bis 3, wobei der Wendelseparator (100) in einem einstellbaren Neigungswinkel in Bezug auf die horizontale Ebene angeordnet ist und der Winkel vorzugsweise zwischen 0 und 12 Grad in Bezug auf die horizontale Ebene beträgt.

5. Verfahren nach einem der Ansprüche 1 bis 4, wobei der Flüssigkeitsstrom zwischen etwa 151 Liter und 189 Liter (40 und 50 Gallonen) pro Minute beträgt und jede Düse einen Wasserdruck von etwa 0,3 bar (5 psi) liefert.

6. Verfahren nach einem der Ansprüche 1 bis 5, wobei der Wendelseparator (100) eine Kammer umfasst, die so konfiguriert ist, dass sie mit unterschiedlichen Frequenzen vibriert.

7. Verfahren nach einem der Ansprüche 1 bis 6, wobei die Abfallpartikel eine Größe von weniger als etwa 10 mm bis zu etwa 13 cm aufweisen.

8. Verfahren nach einem der Ansprüche 1 bis 7, wobei die Drehgeschwindigkeit des Wendelseparators (100), der Flüssigkeitsstrom, der Druck des Sprühnebels aus den Düsen (140) oder eine Kombination davon einstellbar ist.

9. Ein System zum Trennen von Abfallmaterial, das Folgendes umfasst:
a) eine Materialquelle, bei der es sich um Verbrennungsofenasche, Autoschredderrückstände, Weißwarenschredderrückstände, Elektroschrott, Bauelemente, Müllverstromungsschlacke, Stahlwerksschlacke, Ferrochromschlacke, wiedergewonnenes Deponiematerial oder eine Kombination davon handelt;
b) einen Klassierer zum Klassieren des Materials;
c) einen Wendelseparator (100), der so konfiguriert ist, dass er das Material in eine Schwerfraktion und die Leichtfraktion trennt, wobei ein Wendelseparator ein rotierender Zylinder (105) ist, in dem (a) ein oder mehrere Wendelseparatoren angeordnet sind, wobei der eine oder die mehreren Wendelseparatoren ferner umfassen eine Spiralstruktur, (b) einen Satz sich in Längsrichtung erstreckender Nuten, die entlang der Spiralstruktur angeordnet sind, und (c) Düsen (140), die so konfiguriert sind, dass sie einen Flüssigkeitsstrahl auf den Abfallstrom entlang der Länge des Zylinders einleiten, und der Wendelseparator in einem Neigungswinkel in Bezug auf die horizontale Ebene angeordnet ist; und
d) einen Sammler;
**dadurch gekennzeichnet, dass** die Düsen (140) einen Strom von Waschflüssigkeit in den Wendelseparator (100) abgeben, um die leichte Fraktion in eine der schweren Fraktion entgegengesetzte Richtung zu drücken.

10. System nach Anspruch 9, wobei der Wendelseparator (100) ferner eine Vielzahl von Zonen umfasst, wobei jede Zone ferner eine Auskleidung umfasst; und
die Düse, der Inhalt der Waschflüssigkeit, die Auskleidung oder eine Kombination daraus sich von einer Zone zur anderen unterscheidet.

11. System nach einem der Ansprüche 9 bis 10, wobei der Wendelseparator (100) eine Reihe von Steigungen, eine abwärts gerichtete Seite und eine aufwärts gerichtete Seite umfasst; und die Steigungen ferner einen eingestellten Winkel auf der aufwärts gerichteten Seite und einen Gegenwinkel auf der abwärts gerichteten Seite umfassen.

12. System nach einem der Ansprüche 9 bis 11, wobei der Wendelseparator (100) ferner eine Spiralstruktur aufweist, die einen Satz sich in Längsrichtung erstreckender Nuten (120) umfasst;
wobei die Rillen so konfiguriert sind, dass sie zumindest einen Teil der Schwerfraktion während der Trennung aufnehmen.

13. System nach einem der Ansprüche 9 bis 12, wobei der Wendelseparator (100) eine Kammer umfasst, die so konfiguriert ist, dass sie mit unterschiedlichen Frequenzen vibriert.

14. System nach einem der Ansprüche 9 bis 13, umfassend ferner einen Grobabscheider, einen Reiniger, einen Finisher-Wendelseparator, einen Eindicker, eine Exzenterpumpe, einen Siebabscheider, einen Entschlacker, einen Poliertisch, einen Zerkleinerer, einen Verteilerkasten, der so konfiguriert ist, dass er einen konstanten Strom von Abfallstromzylindern erzeugt, oder eine Kombination davon.

## Revendications

1. Procédé de séparation des déchets, comprenant :
la fourniture d'un flux de déchets, dans lequel le flux de déchets comprend des particules de déchets et un flux de liquide, dans lequel le flux de déchets comprend des cendres d'incinérateur, des résidus de broyage d'automobiles, des résidus de broyage de produits blancs, des déchets électroniques, des composants de construction, des scories de transformation des déchets en énergie, des scories d'aciérie, des scories de ferrochrome, des matériaux de décharge récupérés, ou une combinaison de ceux-ci ;
la fourniture d'un séparateur à hélice (100) qui est un cylindre rotatif (105) ayant (a) un ou plusieurs séparateurs à hélice disposés dans celui-ci, le ou les séparateurs à hélice (100) comprenant en outre : une structure en spirale, (b) un ensemble de rainures s'étendant longitudinalement (120) disposées le long de la structure en spirale, et (c) des buses (140) configurées pour introduire un jet de liquide sur le flux de déchets le long de la longueur du cylindre,
une étape de calibrage, dans laquelle le flux de déchets est introduit dans une entrée du séparateur à hélice (100) ; l'étape de calibrage comprend la rotation du séparateur à hélice pour séparer les particules de déchets en fonction des vitesses ou des densités de sédimentation des particules, dans laquelle une fraction lourde se dépose dans les rainures et une fraction légère reste au sommet du flux de déchets ; et
la fraction lourde remonte le séparateur à hélice (100) pour être collectée et la fraction légère est poussée à l'arrière du séparateur à hélice (100) et sort par une extrémité arrière du cylindre rotatif ;
**caractérisé en ce que,** chacune des une ou plusieurs buses (140) crée un flux de liquide sur le flux de déchets qui pousse la fraction légère dans une direction opposée à la fraction lourde.

2. Procédé de la revendication 1, dans lequel le séparateur à hélice (100) comprend en outre une pluralité de zones, dans lequel chaque zone comprend un revêtement ; et les buses, la teneur en liquide du jet, le revêtement, ou une combinaison de ceux-ci diffèrent d'une zone à l'autre.

3. Procédé de la revendication 1 ou 2, dans lequel le séparateur à hélice (100) comprend une série de conducteurs, un côté descendant et un côté montant ; et les conducteurs comprennent un angle fixe sur le côté montant et un contre-angle sur le côté descendant.

4. Procédé de l'une quelconque des revendications 1 à 3, dans lequel le séparateur à hélice (100) est positionné sur un angle d'inclinaison réglable par rapport au plan horizontal et, de préférence, l'angle est compris entre 0 et 12 degrés par rapport au plan horizontal.

5. Procédé de l'une quelconque des revendications 1 à 4, dans lequel le débit de liquide est compris entre environ 151 litres et 189 litres (40 et 50 gallons) par minute et chaque buse fournit environ 0,3 bar (5 psi) de pression d'eau.

6. Procédé de l'une quelconque des revendications 1 à 5, dans lequel le séparateur à hélice (100) comprend une chambre qui est configurée pour vibrer à des fréquences variables.

7. Le procédé de l'une quelconque des revendications 1 à 6, dans lequel les particules de déchets ont une taille comprise entre moins d'environ 10 mm et environ 13 cm.

8. Le procédé de l'une quelconque des revendications 1 à 7, dans lequel une vitesse de rotation du séparateur à hélice (100), le débit de liquide, la pression du jet provenant des buses (140), ou une combinaison de ceux-ci est réglable.

9. Système de séparation des déchets, comprenant :
a) une source de matériau qui est des cendres d'incinérateur, des résidus de broyage d'automobiles, des résidus de broyage de produits blancs, des déchets électroniques, des composants de construction, des scories de transformation des déchets en énergie, des scories d'aciérie, des scories de ferrochrome, des matériaux de décharge récupérés, ou une combinaison de ceux-ci ;
b) un calibreur pour calibrer le matériau ;
c) un séparateur à hélice (100) configuré pour séparer le matériau en une fraction lourde et une fraction légère, dans lequel un séparateur à hélice est un cylindre rotatif (105) ayant (a) un ou plusieurs séparateurs à hélice disposés à l'intérieur, le ou les séparateurs à hélice comprenant en outre : une structure en spirale, (b) un ensemble de rainures s'étendant longitudinalement disposées le long de la structure en spirale, et (c) ; des buses (140) configurées pour introduire un jet de liquide sur le flux de déchets sur la longueur du cylindre, et le séparateur à hélice est positionné à un angle d'inclinaison par rapport au plan horizontal ; et
d) un collecteur ;
**caractérisé en ce que,** les buses (140) délivrent un jet de liquide de lavage dans le séparateur à hélice (100) pour pousser la fraction légère dans une direction opposée à la fraction lourde.

10. Le système de la revendication 9, dans lequel le séparateur à hélice (100) comprend en outre une pluralité de zones, dans lequel chaque zone comprend en outre un revêtement ; et
la buse, le contenu du liquide de lavage, le revêtement ou une combinaison de ceux-ci diffèrent d'une zone à l'autre.

11. Le système de l'une quelconque des revendications 9 à 10, dans lequel le séparateur à hélice (100) comprend une série de conducteurs, un côté descendant et un côté montant ; et les conducteurs comprennent en outre un angle de réglage sur le côté montant et un contre-angle sur le côté descendant.

12. Le système de l'une quelconque des revendications 9 à 11, dans lequel le séparateur à hélice (100) comprend en outre une structure en spirale qui comprend un ensemble de rainures s'étendant longitudinalement (120) ;
les rainures étant configurées pour recevoir au moins une partie de la fraction lourde pendant la séparation.

13. Le système de l'une quelconque des revendications 9 à 12, dans lequel le séparateur à hélice (100) comprend une chambre qui est configurée pour vibrer à des fréquences variables.

14. Le système de l'une quelconque des revendications 9 à 13, comprenant en outre un dégrossisseur, un nettoyeur, un séparateur à hélice de finition, un épaississeur, une pompe excentrique, un séparateur à tamis, un désemboueur, une table de polissage, un réducteur de taille, une boîte de distribution configurée pour créer un flux constant de cylindre de flux de déchets, ou une combinaison de ceux-ci.
